# FASCICULE DE BREVET EUROPEEN

(11) **EP 3 864 965 B1**
(45) Date de publication et mention de la délivrance du brevet: **11.10.2023**
(21) Numéro de dépôt: 21156323.4
(22) Date de dépôt: 10.02.2021
(51) Int. Cl.: A23L 2/02, A23B 7/155, A23L 2/84, B65D 81/20, C12G 1/022, A23L 3/18

(54) **PROCÉDÉ ET ÉQUIPEMENT POUR LA PRÉPARATION D'UN PRODUIT ALIMENTAIRE, NOTAMMENT À BASE DE BAIES**
VERFAHREN UND AUSRÜSTUNG FÜR DIE ZUBEREITUNG EINES LEBENSMITTELPRODUKTS, INSBESONDERE AUF DER GRUNDLAGE VON BEEREN
METHOD AND DEVICE FOR THE PREPARATION OF A FOOD PRODUCT, IN PARTICULAR MADE FROM BERRIES

(30) Priorité: 11.02.2020 FR 2001328
(43) Date de publication de la demande: 18.08.2021
(73) Titulaire: Pera-Pellenc S.A., 34510 Florensac (FR)
(72) Inventeur: FAVAREL, Jean-Luc, 81800 RABASTENS (FR)
(74) Mandataire: Weber, Etienne Nicolas

(56) Documents cités:
- WO-A1-2013/045865
- FR-A1- 2 826 665
- MOUTOUNET M ET AL: "PRETREATMENT OF GRAPES BY FLASH RELEASE UNDER VACUUM. INFLUENCE ON WINE QUALITY", OFFICE INTERNATIONAL DE LA VIGNE ET DU VIN. BULLETIN, OFFICE INTERNATIONAL DE LA VIGNE ET DU VIN, FR, vol. 73, no. 827/828, 1 janvier 2000 (2000-01-01), pages 6-19, XP008001616, ISSN: 0029-7127

## Description

### Domaine technique

La présente invention concerne un procédé et un équipement de préparation d'un produit alimentaire à base de fruits, notamment à base de baies, et en particulier à partir de baies de raisin.

Le procédé de l'invention peut être mis à profit notamment dans des processus de vinification. Il vise non seulement à améliorer l'extraction des précurseurs aromatiques des baies mais également à éviter certains composés susceptibles de nuire à la qualité gustative du produit alimentaire, et du vin qui en est issu.

L'invention trouve des applications dans le domaine technique agroalimentaire et notamment pour l'élaboration de vin, mais également de produits fermentés issus de jus de fruits, par exemple de jus de pommes, de poires, de cerises, de myrtilles etc.

### Etat de la technique antérieure

La baie, et en particulier la baie de raisin, est constituée de pulpe et d'une pellicule, la peau entourant la pulpe. La pulpe contient essentiellement du jus, riche en sucres, en acides et en eau. Le jus est libéré par écrasement de la baie. Ceci peut avoir lieu lors d'un foulage, lors d'un pressurage d'une vendange, mais aussi lors d'une récolte mécanique, lors d'un pompage ou d'un transfert que subit le raisin.

La pellicule contient un grand nombre de précurseurs aromatiques, des tanins, des anthocyanes, des polysaccharides, ainsi que d'autres molécules participant à la qualité du vin. Les tanins contribuent à l'élaboration de la saveur du vin, les anthocyanes contribuent à la couleur du vin, les polysaccharides contribuent à l'onctuosité et la rondeur en bouche du vin, tandis que les précurseurs d'arômes contribuent au goût et au nez du vin. Plusieurs techniques sont à la disposition du vinificateur pour extraire et doser ces composés.

On peut relever en particulier les techniques connues suivantes :
- le délestage : il consiste à vider une cuve contenant des raisins, de son jus et à réintraduire le jus au-dessus d'un chapeau de marc formé dans la cuve de manière à extraire les composés retenus dans le chapeau de marc ;
- le remontage : comparable au délestage, il consiste à pomper le jus accumulé dans une partie basse d'une cuve contenant le jus et à la réintroduire en une partie haute de la cuve ;
- l'utilisation d'enzymes d'extraction : les enzymes sont utilisées pour provoquer une lyse, c'est-à-dire une fracturation des cellules végétales des baies, de manière à libérer leur contenu ;

- le "thermotraitement" : il s'agit d'une extraction à la chaleur libérant essentiellement les anthocyanes contenus dans la pellicule des baies ;
- la détente : ce procédé, encore appelé "flash-détente" ou détente sous vide, consiste à abaisser rapidement la pression de l'atmosphère environnantes des baies de manière à créer un "vide". La détente provoque la vaporisation de l'eau intra-cellulaire des pellicules, l'ouverture des cellules et la libération de tanins, d'anthocyanes, de polysaccharides et de précurseurs d'arômes.

Une description de la technique de détente, et de traitement avec des enzymes peut être trouvée, par exemple dans le brevet FR2980800. Le brevet WO2013/045865 et le brevet FR2826665 divulguent un procédé de préparation d'un produit alimentaire liquide à partir de baies comprenant une mise sous vide par flash-détente précédant l'étape de macération et de pressurage des baies.

### Exposé de l'invention

L'invention procède du constat d'un certain nombre d'effets négatifs affectant le vin et susceptibles de résulter de l'extraction, ou d'opérations subséquentes de vinification et l'élevage du vin.

Une première difficulté, liée à une forte extraction, par exemple une extraction par détente, est présence potentiellement excessive de tanins astringents ou de composés herbacés, influençant négativement la perception olfactive et gustative du vin.

Une autre difficulté, conduisant également à une dégradation des qualités organoleptiques du vin, se manifeste lors du traitement de raisins atteints de "smoke-taint" c'est-à-dire de vignes ayant été exposées à de la fumée.

Ce phénomène se produit lorsque la fumée d'un incendie, par exemple d'un incendie saisonnier de broussailles ou d'un feu de forêt, atteint un vignoble. Il concerne en particulier des régions viticoles de la Californie, de l'Australie, et du Portugal. La fumée retombant sur la vigne a tendance à générer dans le végétal des composés phénoliques volatils, en particulier des composés de la famille des ethyl-phénols. Ceux-ci sont susceptibles d'être accumulés dans les baies, notamment au moment de la véraison de la vigne, et sont susceptibles d'être libérés lors de la vinification ou de l'élevage du vin.

L'invention a ainsi pour but de proposer un procédé de préparation d'un produit alimentaire à base de baies, et en particulier à base de baies de raisin, permettant de surmonter les difficultés précitées, et favorisant, le cas échéant, des opérations subséquentes de vinification et d'élevage d'un vin sans défauts. La référence, dans la description qui suit à des baies de raisin, est comprise comme n'excluant pas la mise en oeuvre de l'invention avec d'autres types de baies ou de fruits. L'invention peut en effet être mise en oeuvre pour le traitement de baies ou de drupes telles que, par exemple, des baies de cassis, ou de canneberge, mais également de cerises, de poires ou de pommes.

Un autre but est de proposer un tel procédé qui soit compatible avec différents processus d'extraction, y compris ceux conduisant à une forte extraction des composés de la pellicule des baies.

L'invention a encore pour but de proposer un équipement permettant de mettre en oeuvre le procédé.

Pour atteindre ces buts, l'invention propose un procédé de préparation d'un produit alimentaire à base de baies, et en particulier à base de baies de raisin, et comprenant les étapes successives suivantes :
a) la macération enzymatique des baies,
b) le pressurage des baies, avec une séparation d'un jus de baies et de particules solides des baies,
c) le traitement du jus de baies par détente, le traitement comprenant une élimination de condensats formés lors de la détente.

On entend par macération enzymatique des baies une étape de traitement lors de laquelle des particules solides comprenant les pellicules des baies, les pépins et éventuellement des résidus de rafle, sont en contact avec le jus. Cette opération, dans le cadre de la fabrication du vin peut être précédée d'un foulage, par exemple. La macération est dite enzymatique dans la mesure où des enzymes endogènes ou exogènes sont mises à profit pour couper les chaines pectidiques des pellicules et libérer les composés contenus dans les pellicules de baies. Dans le cadre de la fabrication du vin, la macération enzymatique favorise la libération de tanins, d'anthocyanes, de polysaccharides et de précurseurs aromatiques, notamment.

Comme indiqué ci-dessus, les enzymes peuvent être des enzymes endogènes, naturellement présentes sur les baies et/ou des enzymes exogènes, c'est-à-dire des enzymes ajoutées. En particulier, l'étape a) du procédé, c'est-à-dire la macération, peut comporter un ensemencement des baies avec au moins une enzyme pectolytique. La ou les enzymes ajoutées peuvent être choisies, par exemple, parmi une polygalacturonase, une rhamnogalacturonase, une pectine estérase, ou une pectine-lyase.

Eventuellement, une opération de chauffage intervenant avant l'étape a) du procédé peut être mise à profit pour dénaturer des enzymes endogènes présents sur les baies de raisin. Ceci permet au besoin d'éliminer des laccases issues de pourriture grise, ou de polyphénols oxydases susceptibles de provoquer des oxydations non souhaitées. Le chauffage permet également de neutraliser d'éventuels contaminants et notamment des levures endogènes pouvant induire des déviations organoleptiques. Par exemple, des levures de type brettanomyces peuvent être neutralisées.

La macération de l'étape a) peut être effectuée de préférence à une température de supérieure à 55°C et inférieure à 60°C. La température peut être ajustée par chauffage ou par refroidissement.

Une température supérieure à 50°C, et de préférence supérieure à 55°C, contribue à éviter ou à limiter une fermentation alcoolique pendant l'étape de macération. Cette température est en particulier trop élevée pour la multiplication des levures de fermentation telles que saccharomyces cervesiae. D'éventuelles molécules d'alcool formées lors de la macération risqueraient en effet de se trouver dénaturées ou éliminées par le traitement de détente (flash-détente) subséquent effectué lors de l'étape c). En particulier, des molécules d'éthanol résultant d'une fermentation alcoolique seraient éliminées de manière concurrente à l'eau, voire préférentiellement à l'eau, lors de l'élimination des condensats de détente à l'étape c) du procédé.

La mise en oeuvre d'une macération lente à des températures inférieures à 55°C, n'est toutefois pas exclue.

Par ailleurs, la macération peut être réalisée de préférence à une température inférieure à 60°C. Tout en favorisant la macération, une température inférieure à 60°C permet d'éviter une altération des enzymes de macération.

La gamme de température et en particulier la température supérieure à 55°C peut être conservée pendant le pressurage et la séparation du jus, ou moût, et ce jusqu'à au traitement des baies par détente.

De préférence, le pressurage et la séparation du jus de baies et des particules peut également être effectué à une température supérieure à 50°C pour éviter ou limiter une éventuelle fermentation alcoolique. Le pressurage et la séparation du jus des particules peut avoir lieu, dans un pressoir, par exemple un pressoir vinicole à membrane. Une séparation par centrifugation est également envisageable.

L'étape c) du procédé comprend une détente encore désignée par « flash-détente » ou « détente-éclair ». Cette opération peut être réalisée en abaissant brusquement la pression d'une enceinte contenant le jus de baies. Toutefois, et de préférence, l'opération de détente peut aussi avoir lieu en continu par passage du jus de baies dans un réacteur de flash-détente dans lequel règne une dépression (encore désignée par « vide ») par rapport à la pression atmosphérique. Un tel équipement est connu en soi et commercialisé, par exemple, par la société Pera-Pellene S.A.

La détente a pour double effet d'abaisser la température du jus mais aussi de provoquer une évaporation de certains composants du jus, et en particulier de l'eau qu'il contient. Les composants évaporés, et en particulier l'eau évaporée, sont condensés et les condensats sont éliminés.

L'évaporation de l'eau et l'élimination des condensats permet non seulement d'obtenir un jus plus concentré, et de forte couleur, mais permet également d'éliminer certains composés néfastes tels que des composés herbacés, ou des pyrazines susceptibles d'avoir été libérés lors des étapes de macération et de pressurage précédant la détente. En particulier, il est possible d'éliminer des composés de la famille des éthyl-phénols accumulés dans les baies et provenant du phénomène de «smoke-taint » évoqué précédemment. Il convient de souligner que, de manière avantageuse, le traitement de détente permet d'éliminer les composés volatils herbacés libérés lors de la macération enzymatique et du pressurage sans pour autant provoquer une nouvelle extraction tannique.

Le jus obtenu au terme du procédé, et en particulier le jus obtenu à partir de baies de raisin, présente ainsi des propriétés améliorées pour la vinification et l'élevage de vin.

Aussi, le procédé peut comporter en outre une étape de fermentation alcoolique du jus de baies, à l'issue de l'étape c).

Le traitement de détente de l'étape c) peut être modulé en intensité de manière à doser l'élimination de l'eau et de certains composés du jus et la limiter, par exemple, de 8 à 10 pour cent du volume de jus traité. Les paramètres de modulation de l'intensité du traitement de détente sont la température initiale du jus, et l'importance de la dépression. Une température initiale élevée et une forte dépression ont pour effet d'augmenter l'intensité de la détente, tandis qu'une température initiale plus faible, et une dépression moins importante sont pour effet de la modérer.

Dans le cadre du procédé de l'invention, la température initiale du jus de baies juste avant détente, est de préférence compris entre 75°C et 85°C, tandis que la dépression est effectuée avec pression absolue résiduelle, de préférence comprise entre 40 et 60 millibars (4000 à 6000 Pa).

Pour obtenir une température idéale pour le traitement de dépression, l'étape c) de traitement du jus de baies par détente peut être précédée d'un chauffage du jus de baies à une température comprise entre 75°C et 85°C.

Le traitement de détente a pour effet d'abaisser la température du jus, ce qui favorise sa fermentation alcoolique susceptible d'être opérée à l'issue de la détente. Au besoin, le jus peut subir un refroidissement supplémentaire ou plus généralement un ajustement de sa température aux besoins de la fermentation. Cette température est par exemple de 30°C à 35°C.

L'invention peut être mise en oeuvre simplement pour l'optimisation d'une macération pré-fermentaire à chaud, et pour obtenir un jus aux propriétés améliorées.

L'invention peut également être mise en oeuvre, notamment pour ses applications vinicoles, dans le cadre d'un traitement plus complet à partir des baies vendangées.

En particulier le procédé peut comporter en outre, préalablement à l'étape a), un traitement des baies par détente dans une chambre de détente. Cette première détente, également du type flash-détente, a lieu avant la macération enzymatique et avant une deuxième détente, qui est la détente décrite précédemment, opérée à l'étape c) du procédé.

Par simplification, dans la suite de la description, la détente réalisée sur les baies, c'est-à-dire la détente opérée avant l'étape a) du procédé, est désignée par « première détente » tandis que la détente réalisée sur le jus de baies, lors de l'étape c) du procédé, est désignée par « deuxième détente ».

La première détente peut être accompagnée ou non de l'élimination des condensats résultant de la détente. Toutefois, et de préférence, le procédé peut comporter une élimination de condensats formés lors du traitement des baies par la première détente. L'élimination des condensats permet d'éliminer en particulier certaines molécules indésirables libres (non liées à des sucres) telles que, par exemple, des molécules résultant de l'exposition des baies à de la fumée (« smoke taint »).

La première détente permet également de provoquer un éclatement de cellules des baies et de favoriser ainsi l'activité enzymatique au cours de la macération subséquente au cours de l'étape a) du procédé.

Dans une application à la fabrication de vin, il est possible d'obtenir des vins plus souples, et plus riches en oligosaccharides, se caractérisant par du gras en bouche.

La première détente est de préférence moins intense que la deuxième détente.

Elle peut être réalisée de préférence à partir d'une température initiale des baies de 75°C à 85°C et une pression absolue résiduelle (ou un « vide ») de 200 à 300 millibars (20000 à 30000 Pa).

Aussi, le traitement des baies peut être précédé par un chauffage des baies à la température initiale précitée comprise entre 75°C et 85°C.

La détente opérée sur les baies de raisin a pour effet d'en abaisser la température. Idéalement la détente peut être pilotée, en jouant, par exemple, sur la température initiale et/ou sur la dépression de manière que la température finale des baies soit dans une plage comprise entre 55°C et 60°C. Ainsi, au moyen la première dépression, les baies peuvent être directement portées à une température idéale pour débuter la macération enzymatique de l'étape a) du procédé. Celle-ci peut alors avoir lieu directement à la sortie du réacteur de flash-détente.

A défaut, les baies peuvent être refroidies ou réchauffées.

Le traitement des baies par détente, c'est-à-dire la première détente, et le traitement du jus de baies par détente lors de l'étape c), c'est-à-dire la deuxième détente, peuvent avoir lieu dans des réacteurs de flash détente distincts. Ces deux détentes peuvent également avoir lieu dans une même chambre de détente, c'est-à-dire par passage successif des baies et du jus dans une même chambre de détente.

L'invention concerne également un équipement de détente, et notamment un réacteur de flash-détente, pour la préparation d'un produit alimentaire conformément au procédé décrit ci-dessus, et en particulier pour le procédé impliquant la première et la deuxième détente.

L'équipement comprend :
- une chambre de détente,
- au moins une pompe d'alimentation, pour l'alimentation de la chambre de détente,
- au moins une pompe d'extraction, pour le vidage de la chambre de détente,
- au moins une sonde de remplissage de la chambre de détente,
- un dispositif de commande de la pompe d'alimentation et de la pompe d'extraction, le dispositif de commande recevant un signal de ladite sonde de remplissage et étant sensible à un niveau de remplissage bas de la chambre de détente, un niveau de remplissage intermédiaire de la chambre de détente et à au moins niveau de remplissage haut de la chambre de détente.

Le dispositif de commande est configuré pour provoquer :
- un arrêt, respectivement une réduction du débit, de la pompe d'extraction lorsque un contenu de la chambre de détente atteint le niveau de remplissage bas,
- une mise en marche, respectivement une augmentation du débit, de la pompe d'extraction lorsque le contenu de la chambre de détente atteint le niveau de remplissage intermédiaire,
- un arrêt, respectivement une réduction du débit de la pompe d'alimentation, lorsque contenu de la chambre de détente atteint un niveau de remplissage haut de la cuve.

Conformément à l'invention, l'équipement comprend en outre une commande de commutation entre :
- un premier mode de fonctionnement, correspondant au traitement des baies par détente, dans lequel le dispositif de commande est sensible à un premier niveau haut, et dans lequel la pompe d'alimentation est arrêtée, respectivement son débit est réduit, lors que le contenu de la chambre de détente atteint le premier niveau de remplissage haut, et
- un deuxième mode de fonctionnement, correspondant au traitement du jus de baies par détente, dans lequel la sonde le dispositif de commande est sensible à au moins un deuxième niveau haut, supérieur au premier niveau haut, et dans lequel la pompe d'alimentation est arrêtée, respectivement son débit est réduit, lorsque le contenu de la chambre de détente atteint le deuxième niveau haut.

Le premier et le deuxième mode de fonctionnement sont mis en œuvre respectivement pour la « première détente » et la « deuxième détente ».

La pompe d'alimentation et la pompe d'extraction permettent respectivement d'alimenter la chambre de détente avec des baies ou du jus à traiter, et d'extraire les baies ou le jus traités de la chambre de détente.

La modification du « niveau haut » et notamment la distinction d'au moins deux niveaux hauts sélectivement mis en oeuvre pour le traitement des baies et le traitement du jus, permet un fonctionnement optimal de l'équipement et permet d'éviter des phénomènes d'obstruction et de cavitation en amont de la pompe d'extraction.

Il en résulte un fonctionnement amélioré de la chambre de détente et surtout la possibilité d'utiliser le même équipement pour les deux opérations de détente.

De manière avantageuse l'équipement peut comporter une pluralité de sondes de remplissage, au moins une sonde de remplissage étant respectivement associée au niveau de remplissage bas, au niveau de remplissage intermédiaire, au premier niveau de remplissage haut, et au deuxième niveau de remplissage haut.

A titre d'exemple, quatre sondes peuvent ainsi être utilisés respectivement pour le niveau bas, le niveau intermédiaire, le premier niveau haut et le deuxième niveau haut.

Selon une autre possibilité l'équipement peut comporter une sonde de remplissage associée au niveau de remplissage haut, la sonde présentant une liberté de mouvement dans la chambre de détente, entre une première position correspondant au premier niveau de remplissage haut et une deuxième position correspondant au deuxième niveau de remplissage haut.

L'équipement peut, dans ce cas, être configuré pour la première détente en abaissant la position de la sonde associée au niveau haut et peut être configuré pour la deuxième détente en relevant la même sonde.

Les sondes sensibles au niveau bas et au niveau intermédiaire peuvent être fixes.

Selon une autre possibilité encore, toutefois moins facile à mettre en oeuvre, l'équipement peut comporter une seule sonde capable de délivrer un signal proportionnel au remplissage de la chambre de détente. Dans ce cas le signal est comparé à des consignes de niveau bas, de niveau intermédiaire et à des consignes de niveau haut pour commander le fonctionnement de l'équipement. Une pompe à vide, reliée à la chambre de détente est distincte de la pompe d'extraction. La pompe à vide peut être pilotée pour différentes pressions résiduelles ou plusieurs niveaux de vide de manière à réaliser une détente plus ou moins forte. De préférence, la première détente peut être moins forte. Elle est alors désignée par « détente partielle ». La deuxième détente, lorsqu'elle est réalisée avec un vide plus poussé, est désignée par « détente totale ».

D'autres caractéristiques et avantages de l'invention ressortiront de la description qui suit, en référence aux figures des dessins. Cette description est donnée à titre illustratif et non limitatif.

### Brève description des figures

La figure 1 est un logigramme indiquant les principales opérations d'un procédé de préparation d'un produit alimentaire conforme à l'invention.
La figure 2 est une représentation schématique simplifiée d'un équipement pour la préparation d'un produit alimentaire, conforme à l'invention.

Les figures présentent un caractère schématique et sont exécutés en échelle libre.

### Description détaillée de modes de mise en œuvre de l'invention

Dans la description qui suit, des parties identiques ou équivalentes des différentes figures portent les mêmes références.

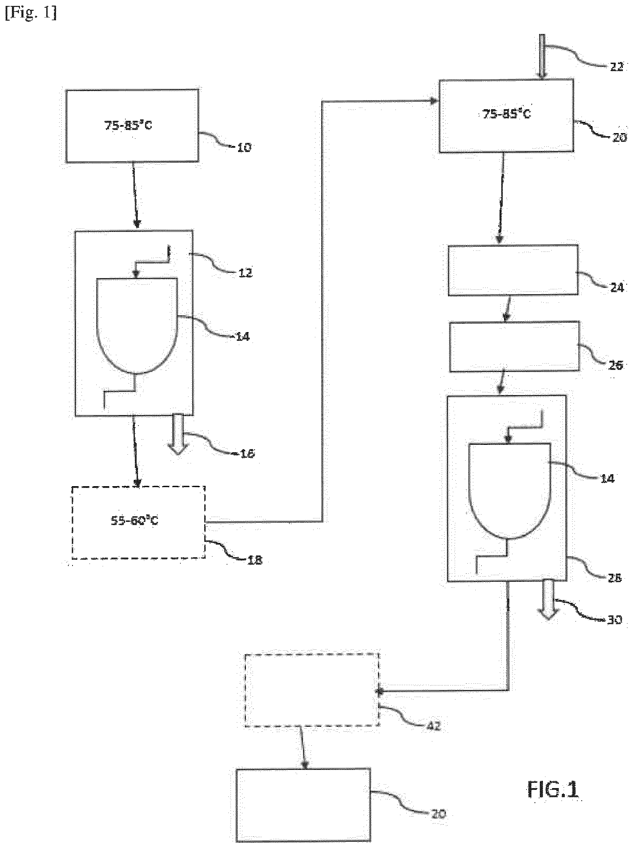

Le logigramme de la figure 1 montre sur sa partie gauche des étapes susceptible d'être mises en oeuvre sur les baies traitées par le procédé de l'invention.

Il s'agit, d'abord d'un chauffage 10 des baies, à une température initiale comprise, par exemple entre 75 et 85°C. Lorsque les baies ont atteint la température initiale, elles subissent un traitement de détente 12 (flash-détente) opéré dans une chambre de détente 14 indiquée symboliquement.

La détente des baies peut être accompagnée par une élimination des condensats formés lors de la détente. L'élimination des condensats est symbolisée par une flèche 16.

A l'issue de cette première détente, opérée sur les baies, la température des baies peut être ajustée, si nécessaire, lors d'une étape 18, de réchauffage, ou de refroidissement, de sorte que les baies soient à une température comprise de préférence entre 55°C et 60°C.

La phase principale du procédé, illustrée sur la partie droite de l'organigramme de la figure 1 peut alors débuter. Elle comprend une macération enzymatique des baies 20. Lors de la macération des enzymes exogynes peuvent être ajoutée aux baies. L'ajout d'enzymes exogènes est symbolisé par une flèche 22. La macération a lieu en maintenant de préférence la température dans la gamme de températures précitée de 55°C à 60°C. La durée de la macération peut être de quelques heures à une ou deux journées.

La macération des baies est suivie de leur pressurage, accompagné de la séparation d'un jus de baies et de particules solides. Le pressurage et la collecte du jus de baies est indiqué avec la référence 24. Dans le cas d'un traitement de baies de raisin, on sépare ainsi le jus, ou le moût, d'une part et les pulpes et les éventuelles rafles d'autre part. Les pulpes et rafles sont éliminées et peuvent être valorisées séparément.

Le jus résultant du pressurage, peut ensuite être chauffé lors d'une étape de chauffage 26. Le jus est chauffé à une température comprise de préférence entre 75°C et 85°C. Cette gamme de température est identique à celle atteinte lors de l'opération de chauffage 18 indiquée précédemment.

Le jus chauffé est introduit dans une chambre de détente et subit une détente 28 (flash détente). La détente peut être opérée dans une chambre de détente distincte de celle utilisée pour l'étape 12 ou dans la même chambre de détente 14. La détente est accompagnée d'une élimination des condensats 30, symbolisée par une flèche.

Le jus, à l'issue de la détente 28, peut être conditionné, ou peut être utilisé immédiatement pour la poursuite de son traitement. En particulier lorsque les baies sont des baies de raisin, le jus peut être utilisé dans un procédé de vinification, comprenant une étape de fermentation alcoolique 40. La fermentation peut être précédée d'un ajustement de la température du jus 42 lors de laquelle la température du jus est maintenue dans une plage de 20°C à 30°C. Selon les paramètres de la détente 28 la température du jus à la sortie de la chambre de détente peut ajustée pour se trouver directement dans la plage souhaitée.

L'ajustement de la température et son contrôle peut être poursuivi pendant la fermentation alcoolique.

Suite à la fermentation alcoolique, le jus peut, le cas échéant le jus issu de raisins, peut être soumis à d'autres opération de vinification, qui ne sont pas décrites ici et qui ne font pas partie de l'invention.

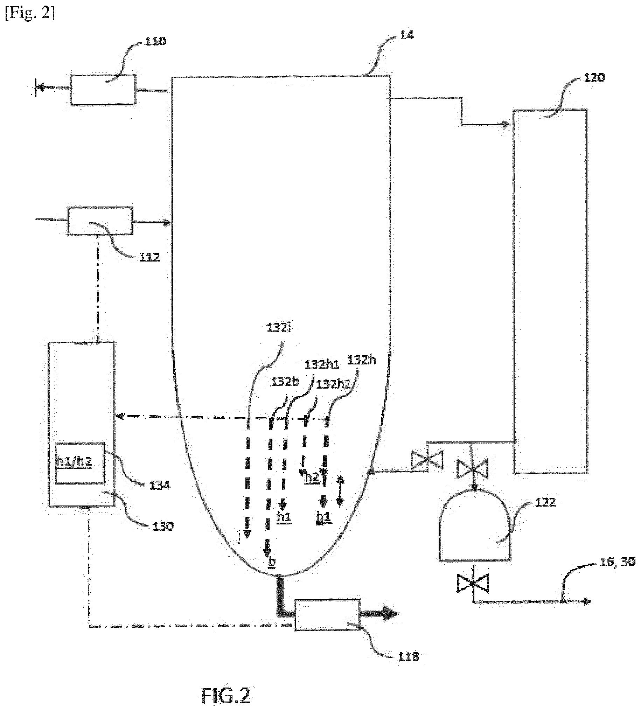

La figure 2 montre un équipement de détente utilisable pour la mise en oeuvre de l'invention.

L'équipement comprend pour l'essentiel une chambre de détente 14 encore désignée par réacteur de détente. Il s'agit d'un réacteur continu dans lequel peut être introduits en continu le jus ou les baies devant subir une détente, et dont peuvent être extraits en continu le jus ou les baies ayant subi la détente. La chambre de détente présente une forme générale cylindrique avec une partie basse tronconique pour la collecte et l'extraction des jus ou baies traitées par détente.

La détente est opérée par la présence dans la chambre de détente d'un vide relatif. Le vide est établi et maintenu au moyen d'une pompe à vide 110.

Le jus ou les baies à traiter sont introduits dans la chambre de détente 14 au moyen d'une pompe d'alimentation 112. Le jus ou les baies traités sont extraits en partie basse de la chambre de détente 14 au moyen d'une pompe d'extraction 118.

La détente des baies ou des jus a pour effet de provoquer une évaporation d'eau et une évaporation d'un certain nombre de composés décrits précédemment et dont certains ne sont pas souhaités. Aussi la chambre de détente est associée à un condenseur 120 qui reçoit les vapeurs formées et collectées en partie haute de la chambre de détente.

Le passage des vapeurs dans le condenseur 120 a pour effet de produire des condensats qui peuvent être éliminés par l'intermédiaire d'un ballon d'extraction des condensats 122.

Un jeu de vannes, non référencé, permet au choix de diriger les condensats du condenseur 120 vers le ballon d'extraction des condensats 122, ou éventuellement d'en réintroduire tout ou partie dans le réacteur. Les vannes permettent de doser l'élimination des condensats. L'élimination des condensats est symbolisée par une flèche 16, 30.

Le fonctionnement de la chambre de détente est principalement régi par un dispositif de commande 130. Le dispositif de commande 130 gouverne le fonctionnement de la pompe d'alimentation 112 et de la pompe d'extraction 118.

En particulier le dispositif de commande 130 peut commander l'arrêt ou la mise en marche de la pompe d'alimentation, dans le cas d'une commande de type tout ou rien. Il peut également, commander une réduction ou une augmentation du débit des pompes dans le cas d'une commande progressive.

Dans l'exemple illustré par la figure 2, le dispositif de commande est relié à une pluralité de sondes de niveau 132b, 132i, 132h1, 132h2 sensibles au remplissage de la chambre de détente. Chaque sonde est sensible à un niveau particulier atteint par les baies ou le jus dans la chambre de détente. Une sonde 132b est sensible à un niveau bas b, une sonde 132i est sensible à un niveau intermédiaire i, une sonde 132h1 est sensible à un premier niveau haut h1, et une sonde 132h2 est sensible à un deuxième niveau haut h2 supérieur au premier niveau haut. Le dispositif de commande reçoit le signal des différentes sondes de manière à arrêter le remplissage de la chambre quand le niveau haut est atteint, de mettre en marche l'extraction lorsque le niveau intermédiaire est atteint et d'arrêter l'extraction lorsque le niveau bas est atteint. L'arrêt ou la mise en marche s'entendent, comme indiqué plus haut, comme des commandes instantanées ou progressives.

Le dispositif de commande 130 peut être pourvu d'une interface 134 permettant à un utilisateur d'adapter l'équipement soit au traitement de baies, c'est-à-dire pour la première détente décrite précédemment, soit pour un traitement de jus, c'est-à-dire pour la deuxième détente décrite précédemment.

Dans le cas d'un traitement de baies un signal de la sonde 132h1 sensible au premier niveau haut h1 est utilisée pour commander l'arrêt de la pompe d'alimentation. Ceci permet de limiter le niveau maximum de baies dans la chambre de détente et évite la formation d'un bouchon gênant l'extraction des baies traitées.

En revanche, dans le cas d'un traitement de jus, un signal de la sonde 132h2 sensible au deuxième niveau haut h2 est utilisée pour commander l'arrêt de la pompe d'alimentation. Dans le cas d'une détente d'un jus, il est en effet possible de tolérer un niveau de remplissage supérieur, et donc d'obtenir un rendement de détente supérieur sans risquer d'obstruction intempestive.

## Revendications

1. Procédé de préparation d'un produit alimentaire à base de baies, et en particulier à base de baies de raisin, et comprenant les étapes successives suivantes :
a) la macération enzymatique (20) des baies,
b) le pressurage des baies, avec une séparation d'un jus de baies et de particules solides des baies,
c) un traitement par flash-détente (28) du jus de baies, le traitement comprenant une élimination (30) de condensats formés lors de la détente.

2. Procédé selon la revendication 1, dans lequel la macération enzymatique (20) des baies est réalisée à une température de macération comprise entre 55°C et 60°C.

3. Procédé selon l'une quelconque des revendications 1 ou 2, dans lequel le pressurage et la séparation du jus et des particules solides des baies est effectué à une température supérieure à 50°C.

4. Procédé selon l'une quelconque des revendications 1 à 3, dans lequel l'étape (28) de traitement du jus de baies par flash-détente est précédée d'un chauffage (26) du jus de baies à une température comprise entre 75°C et 85°C.

5. Procédé selon l'une quelconque des revendications précédentes, comprenant en outre une étape (40) de fermentation alcoolique du jus de baies à l'issue de l'étape c).

6. Procédé selon l'une quelconque des revendications précédentes, dans lequel l'étape a) de macération comprend un ensemencement (22) des baies avec une ou plusieurs enzymes choisies parmi une polygalacturonase, une rhamnogalacturonase, une pectine estérase, et une pectine-lyase.

7. Procédé selon l'une quelconque des revendications précédentes, comprenant en outre, préalablement à l'étape a), un traitement (12) des baies par flash-détente.

8. Procédé selon la revendication 7, dans lequel ledit traitement des baies par flash-détente est précédé d'un chauffage (10) des baies à une température initiale comprise entre 75°C et 85°C.

9. Procédé selon l'une quelconque des revendications 7 ou 8, comprenant une élimination (16) de condensats formés lors du traitement des baies par flash-détente.

10. Procédé selon l'une quelconque des revendications 7 ou 8, dans lequel le traitement (12) des baies par flash-détente et le traitement (28) du jus de baies par flash-détente ont lieu dans une même chambre de détente (14).

11. Equipement de détente pour la préparation d'un produit alimentaire conformément à la revendication 8, comportant :
- une chambre de détente (14) à condenseur (120),
- au moins une pompe d'alimentation (112) pour l'alimentation de la chambre de détente (14),
- au moins une pompe d'extraction (118), pour le vidage de la chambre de détente,
- au moins une sonde de remplissage de la chambre de détente (132b, 132i, 132h1, 132h2)
- un dispositif de commande de la pompe d'alimentation et de la pompe d'extraction, le dispositif de commande (130) recevant un signal de ladite sonde de remplissage et étant sensible à un niveau de remplissage bas (b) de la chambre de détente, un niveau de remplissage intermédiaire (i) de la chambre de détente et à au moins niveau de remplissage haut (h1, h2) de la chambre de détente,
et dans lequel le dispositif de commande est configuré pour provoquer :
- un arrêt, respectivement une réduction du débit, de la pompe d'extraction lorsqu'un contenu de la chambre de détente (14) atteint le niveau de remplissage bas (b),
- une mise en marche, respectivement une augmentation du débit, de la pompe d'extraction lorsque le contenu de la chambre de détente (14) atteint le niveau de remplissage intermédiaire (i),
- un arrêt, respectivement une réduction du débit, de la pompe d'alimentation lors que contenu de la chambre de détente atteint un niveau de remplissage haut (h1, h2) de la cuve,
**caractérisé en ce que** l'équipement comprend une commande de commutation entre :
- un premier mode de fonctionnement, correspondant au traitement des baies par flash-détente, dans lequel le dispositif de commande (130) est sensible à un premier niveau haut (h1), et dans lequel la pompe d'alimentation est arrêtée, respectivement son débit est réduit, lorsque le contenu de la chambre de détente (14) atteint le premier niveau de remplissage haut, et
- un deuxième mode de fonctionnement, correspondant au traitement du jus de baies par flash-détente, dans lequel la sonde le dispositif de commande (130) est sensible à au moins un deuxième niveau haut (h2), supérieur au premier niveau haut (h1), et dans lequel la pompe d'alimentation est arrêtée, respectivement son débit est réduit, lorsque le contenu de la chambre de détente (14) atteint le deuxième niveau haut (h2).

12. Equipement selon la revendication 11, comprenant une pluralité de sondes de remplissage (132b, 132i, 132h1, 132h2), au moins une sonde de remplissage étant respectivement associée au niveau de remplissage bas (b), au niveau de remplissage intermédiaire (i), au premier niveau de remplissage haut (h1), et au deuxième niveau de remplissage haut (h2).

13) Equipement selon la revendication 11, comprenant une sonde de remplissage (132h) associée à un niveau de remplissage haut, la sonde présentant une liberté de mouvement entre une première position correspondant au premier niveau de remplissage haut (h1) et une deuxième position (h2) correspondant au deuxième niveau de remplissage haut.

## Patentansprüche

1. Verfahren zur Herstellung eines Nahrungsmittelprodukts auf der Basis von Beeren und insbesondere auf der Basis von Traubenbeeren, und umfassend die folgenden aufeinanderfolgenden Schritte:
a) die enzymatische Mazeration (20) der Beeren,
b) das Auspressen der Beeren mit einer Trennung eines Beerensaftes und fester Partikel der Beeren,
c) eine Flash-Entspannungsbehandlung (28) des Beerensaftes, wobei die Behandlung eine Entfernung (30) von bei der Entspannung gebildeten Kondensaten umfasst.

2. Verfahren nach Anspruch 1, wobei die enzymatische Mazeration (20) der Beeren bei einer Mazerationstemperatur zwischen 55 °C und 60 °C durchgeführt wird.

3. Verfahren nach einem der Ansprüche 1 oder 2, wobei das Auspressen und das Trennen des Saftes und der festen Partikel der Beeren bei einer Temperatur von über 50 °C durchgeführt wird.

4. Verfahren nach einem der Ansprüche 1 bis 3, wobei dem Schritt (28) der Behandlung des Beerensaftes durch Flash-Entspannung eine Erwärmung (26) des Beerensaftes auf eine Temperatur zwischen 75 °C und 85 °C vorausgeht.

5. Verfahren nach einem der vorhergehenden Ansprüche, das weiter einen Schritt (40) der alkoholischen Fermentierung des Beerensaftes am Ende von Schritt c) umfasst.

6. Verfahren nach einem der vorhergehenden Ansprüche, wobei der Schritt a) der Mazeration eine Impfung (22) der Beeren mit einem oder mehreren Enzymen umfasst, die aus einer Polygalacturonase, einer Rhamnogalacturonase, einer Pektinesterase und einer Pektinlyase ausgewählt sind.

7. Verfahren nach einem der vorhergehenden Ansprüche, das außerdem vor Schritt a) eine Behandlung (12) der Beeren durch Flash-Entspannung umfasst.

8. Verfahren nach Anspruch 7, wobei der Behandlung der Beeren durch Flash-Entspannung eine Erwärmung (10) der Beeren auf eine Anfangstemperatur zwischen 75 °C und 85 °C vorausgeht.

9. Verfahren nach einem der Ansprüche 7 oder 8, umfassend ein Entfernen (16) von Kondensaten, die sich bei der Behandlung der Beeren durch Flash-Entspannung gebildet haben.

10. Verfahren nach einem der Ansprüche 7 oder 8, wobei die Behandlung (12) der Beeren durch Flash-Entspannung und die Behandlung (28) des Beerensaftes durch Flash-Entspannung in derselben Entspannungskammer (14) stattfinden.

11. Entspannungsausrüstung für die Herstellung eines Nahrungsmittelprodukts nach Anspruch 8, Folgendes umfassend:
- eine Entspannungskammer (14) mit Kondensator (120),
- mindestens eine Versorgungspumpe (112) zur Versorgung der Entspannungskammer (14),
- mindestens eine Extraktionspumpe (118) zum Entleeren der Entspannungskammer,
- mindestens eine Füllsonde für die Entspannungskammer (132b, 132i, 132h1, 132h2)
- eine Steuereinrichtung für die Versorgungspumpe und die Extraktionspumpe, wobei die Steuereinrichtung (130) ein Signal von der Füllsonde empfängt und auf einen niedrigen Füllstand (b) der Entspannungskammer, einen mittleren Füllstand (i) der Entspannungskammer und mindestens einen hohen Füllstand (h1, h2) der Entspannungskammer anspricht,
und wobei die Steuervorrichtung so konfiguriert ist, dass sie Folgendes bewirkt:
- ein Anhalten bzw. eine Verringerung des Durchflusses der Extraktionspumpe, wenn ein Inhalt der Entspannungskammer (14) den niedrigen Füllstand (b) erreicht,
- ein Inbetriebsetzen bzw. eine Erhöhung des Durchflusses der Extraktionspumpe, wenn der Inhalt der Entspannungskammer (14) den mittleren Füllstand (i) erreicht,
- ein Anhalten bzw. eine Verringerung des Durchflusses der Versorgungspumpe, wenn der Inhalt der Entspannungskammer einen hohen Füllstand (h1, h2) des Behälters erreicht,
**dadurch gekennzeichnet, dass** die Ausrüstung eine Steuerung zum Umschalten umfasst zwischen:
- einem ersten Betriebsmodus, der der Verarbeitung der Beeren durch Flash-Entspannung entspricht, wobei die Steuervorrichtung (130) auf einen ersten hohen Füllstand (h1) anspricht und wobei die Versorgungspumpe angehalten bzw. ihre Fördermenge verringert wird, wenn der Inhalt der Entspannungskammer (14) den ersten hohen Füllstand erreicht, und
- eine zweite Betriebsart, die der Verarbeitung des Beerensaftes durch Flash-Entspannung entspricht, wobei die Sonde die Steuervorrichtung (130) auf mindestens einen zweiten hohen Füllstand (h2) anspricht, der höher ist als der erste hohe Füllstand (h1), und wobei die Versorgungspumpe angehalten wird bzw. ihr Durchfluss reduziert wird, wenn der Inhalt der Entspannungskammer (14) den zweiten hohen Füllstand (h2) erreicht.

12. Ausrüstung nach Anspruch 11, die eine Vielzahl von Füllsonden (132b, 132i, 132h1, 132h2) umfasst, wobei mindestens eine Füllsonde jeweils dem niedrigen Füllstand (b), dem mittleren Füllstand (i), dem ersten hohen Füllstand (h1) und dem zweiten hohen Füllstand (h2) zugeordnet ist.

13. Ausrüstung nach Anspruch 11, umfassend eine Füllsonde (132h), die einem hohen Füllstand zugeordnet ist, wobei die Sonde eine Bewegungsfreiheit zwischen einer ersten Position, die dem ersten hohen Füllstand (h1) entspricht, und einer zweiten Position (h2), die dem zweiten hohen Füllstand entspricht, aufweist.

## Claims

1. A method for preparing a food product based on berries, and in particular based on grape berries, and comprising the following successive steps:
a) enzymatically macerating (20) the berries,
b) pressing the berries, with separating a berry juice and solid particles from the berries,
c) processing (28) the berry juice by flash-expansion, processing comprising removing (30) condensates formed during the expansion.

2. The method according to claim 1, wherein the enzymatic maceration (20) of the berries is carried out at a maceration temperature of between 55 °C and 60 °C.

3. The method according to any of claims 1 or 2, wherein the pressing and separation of a juice and solid particles from the berries is performed at a temperature greater than 50 °C.

4. The method according to any of claims 1 to 3, wherein the step (28) of processing the berry juice by flash-expansion comes after heating (26) the berry juice to a temperature of between 75 °C and 85 °C.

5. The method according to any of the preceding claims, further comprising a step (40) of alcoholically fermenting the berry juice at the end of step c).

6. The method according to any of the preceding claims, wherein the maceration step a) comprises seeding (22) the berries with one or more enzymes selected from a polygalacturonase, a rhamnogalacturonase, a pectin esterase, and a pectin-lyase.

7. The method according to any of the preceding claims, further comprising, prior to step a), processing (12) the berries by flash-expansion.

8. The method according to claim 7, wherein said processing of the berries by flash-expansion comes after heating (10) the berries to an initial temperature of between 75 °C and 85 °C.

9. The method according to any of claims 7 or 8, comprising removing (16) the condensates formed when processing the berries by flash-expansion.

10. The method according to any of claims 7 or 8, wherein the processing (12) of the berries by flash-expansion and the processing (28) of the berry juice by flash-expansion occur in a same expansion chamber (14).

11. Expansion equipment for preparing a food product in accordance with claim 8, including:
- an expansion chamber (14) with a condenser (120),
- at least one supply pump (112) for supplying the expansion chamber (14),
- at least one extraction pump (118), for emptying the expansion chamber,
- at least one fill probe for the expansion chamber (132b, 132i, 132h1, 132h2)
- a device for controlling the supply pump and the extraction pump, the control device (130) receiving a signal from said fill probe and being responsive to a low fill level (b) of the expansion chamber, an intermediate fill level (i) of the expansion chamber and to at least one high fill level (h1, h2) of the expansion chamber,
and wherein the control device is configured to cause:
- stopping, respectively reducing the flow rate, the extraction pump when a content of the expansion chamber (14) reaches the low fill level (b),
- turning on, respectively increasing the flow rate, the extraction pump when the content of the expansion chamber (14) reaches the intermediate fill level (i),
- stopping, respectively reducing the flow rate, the supply pump when the content of the expansion chamber (14) reaches a high fill level (h1, h2) of the tank,
**characterised in that** the equipment comprises a control for switching between:
- a first operation mode, corresponding to the processing of the berries by flash-expansion, wherein the control device (130) is responsive to a first high level (h1), and wherein the supply pump is stopped, respectively its flow rate is reduced, when the content of the expansion chamber (14) reaches the first high fill level, and
- a second operation mode, corresponding to the processing of the berry juice by flash-expansion, wherein the probe of the control device (130) is responsive to at least one second high level (h2), greater than the first high level (h1), and wherein the supply pump is stopped, respectively its flow rate is reduced, when the content of the expansion chamber (14) reaches the second high level (h2).

12. The equipment according to claim 11, comprising a plurality of fill probes (132b, 132i, 132h1, 132h2), at least one fill probe being respectively associated with the low fill level (b), the intermediate fill level (i), the first high fill level (h1), and the second high fill level (h2).

13. The equipment according to claim 11, comprising a fill probe (132h) associated with a high fill level, the probe having a freedom of movement between a first position corresponding to the first high fill level (h1) and a second position (h2) corresponding to the second high fill level.
